# FASCICULE DE BREVET EUROPEEN

(11) **EP 0 903 216 B1**
(45) Date de publication et mention de la délivrance du brevet: **29.01.2003**
(21) Numéro de dépôt: 98402226.9
(22) Date de dépôt: 09.09.1998
(51) Int. Cl.: B29C 70/86, B29C 43/18, F16B 5/01

(54) **Procédé de fabrication d'un panneau du type sandwich, rigidifié localement, et panneau ainsi obtenu**
Verfahren zur Herstellung einer zonenweise versteiften Sandwichplatte und dadurch hergestellte Sandwichplatte
Method of manufacturing a sandwich panel which is locally stiffened, and panel produced thereby

(30) Priorité: 10.09.1997 FR 9711231
(43) Date de publication de la demande: 24.03.1999
(73) Titulaire: PEGUFORM FRANCE, 27950 Saint Marcel (FR)
(72) Inventeur: Hochet, Nicolas, 49500 La Chapelle Sur Oudon (FR); Chervin, Christophe, 44590 Saint Vincent Des Landes (FR)
(74) Mandataire: Le Forestier, Eric

(56) Documents cités:
- DE-A- 2 166 396
- DE-A- 2 513 969
- FR-A- 2 686 043
- FR-A- 2 751 914
- GB-A- 2 201 923
- US-A- 4 996 095
- US-A- 5 150 944
- US-A- 5 614 285
- PATENT ABSTRACTS OF JAPAN vol. 009, no. 070 (M-367), 30 mars 1985 (1985-03-30) & JP 59 201821 A (MAZDA KK), 15 novembre 1984 (1984-11-15)

## Description

La présente invention concerne de manière générale des panneaux de structure composite du type sandwich à âme alvéolaire notamment pour véhicules automobiles, et plus particulièrement un procédé de réalisation d'une zone rigidifiée formant insert au sein d'un tel panneau en vue du montage d'un système de fixation tel que par exemple un système à vis ou à clip.

Les matériaux du type sandwich à âme alvéolaire présentent des caractéristiques de rigidité très importantes eu égard à leur poids.

De manière classique, la construction de tels matériaux consiste à emprisonner par collage ou soudure une âme alvéolaire de faibles caractéristiques mécaniques entre deux peaux présentant une épaisseur beaucoup plus faible que celle de l'âme alvéolaire mais possédant d'excellentes caractéristiques mécaniques.

En outre, on connaît du document FR - 2 711 573 appartenant à la Demanderesse, un procédé pour réaliser un panneau de structure composite du type sandwich à âme alvéolaire, selon lequel on réalise ledit panneau en une seule étape, par pressage dans un moule à froid, d'un empilement constitué d'au moins une première peau en matériau thermoplastique renforcé estampable, d'une âme alvéolaire en matériau thermoplastique, d'une deuxième peau en matériau thermoplastique renforcé estampable, et d'une première couche de revêtement externe en matériau tissé ou non tissé, lesdites peaux étant préalablement chauffées hors du moule à une température de ramollissement.

Un tel procédé est particulièrement avantageux dans le fait qu'il permet en une seule opération de générer la cohésion entre les différentes couches de la structure composite et de conformer ledit panneau. Le panneau ainsi réalisé conserve toutes les propriétés mécaniques dues à la structure sandwich à âme alvéolaire.

Les panneaux de structure composite du type sandwich à âme alvéolaire présentent des caractéristiques de rigidité suffisantes permettant de renforcer structurellement des structures mécaniques soumises à des contraintes importantes sans pour cela trop les alourdir. De tels panneaux sont alors couramment utilisés dans le secteur de la construction navale, aéronautique et ferroviaire.

De manière classique, pour renforcer une structure mécanique on fixe alors à celle-ci un panneau de structure composite du type sandwich à âme alvéolaire. Dans ce cas, le système de fixation sert à transmettre localement les sollicitations mécaniques de la structure mécanique vers le panneau de structure sandwich.

On outre, il peut s'avérer dans un véhicule automobile par exemple, qu'une structure composite du type sandwich à âme alvéolaire soit utilisée à la place d'une structure métallique. Cette structure composite est alors directement fixée au bâti du véhicule par plusieurs points de fixation.

C'est le cas par exemple d'un dossier de siège arrière dont la structure métallique peut être remplacée par un panneau de structure composite du type sandwich à âme alvéolaire.

Le dossier de siège arrière pouvant être soumis à dès sollicitations mécaniques importantes en cas de choc, ces sollicitations sont alors absorbées en partie par la structure composite, mais aussi en partie transmises au bâti du véhicule par l'intermédiaire du système de fixation de ladite structure à ce dernier.

En général, les efforts appliqués sur une telle structure composite de dossier de siège sont dirigés en majeure partie suivant la normale à la surface du matériau. Cette structure subit alors globalement une flexion. Cependant, suivant la capacité de déformation du système de fixation de la structure composite au bâti du véhicule et de la rigidité de celle-ci, les sollicitations mécaniques exercées au niveau du système de fixation peuvent être différentes.

Des essais de traction sur le point d'attache de la ceinture d'un dossier de siège arrière dont la structure a été réalisée en matériau composite du type sandwich à âme alvéolaire, ont permis de mettre en évidence que les sollicitations en traction exercées sur ladite structure composite conduisent à un cisaillement et un matage des peaux et de l'âme alvéolaire la constituant, essentiellement dus aux efforts exercés au niveau du système de fixation de ladite structure. Dans ce cas, ce sont essentiellement les peaux qui s'opposent au déplacement de la vis du système de fixation.

Par ailleurs, un panneau composite à structure sandwich à âme alvéolaire peut être aussi utilisé pour réaliser le sous-plancher d'un véhicule automobile. Une telle pièce est fixée au bâti du véhicule par six à huit points de fixation.

Elle est principalement soumise à des efforts en torsion par exemple lorsque le véhicule monte en partie sur un trottoir.

Les points de fixation de cette structure sont généralement soumis par le jeu des mouvements du véhicule en utilisation courante, à des phénomènes de traction, compression, flexion et torsion.

Dans ce cas également, des essais en traction sur une telle pièce réalisée en matériau sandwich ont permis de mettre en évidence un phénomène de cisaillement des peaux et de l'âme alvéolaire dudit matériau.

De manière classique, pour le montage d'un système permettant la fixation d'un panneau de structure composite du type sandwich sur une structure mécanique, on utilise des inserts qui sont introduits dans la structure sandwich. Ces inserts sont de manière classique des pièces rapportées ou des ferrures d'attache, métalliques ou non, qui constituent des supports à la transmission localisée des sollicitations mécaniques.

Suivant l'intensité des sollicitations mécaniques localisées, on répartie les inserts sur la longueur dudit panneau.

Les inserts permettent d'abaisser jusqu'à un taux admissible les sollicitations localisées mécaniques transmises au matériau sandwich considéré.

Diverses méthodes déjà connues sont mises en oeuvre pour mettre en place de tels inserts dans un panneau de structure composite du type sandwich à âme alvéolaire.

Une des méthodes consiste à percer le panneau de structure sandwich à âme alvéolaire sur toute son épaisseur, à positionner l'insert dans le perçage et à remplir le vidé restant entre l'insert et le matériau d'une résine de remplissage du type époxyde. Une telle résine de remplissage peut être allégée par incorporation de microballons phénoliques.

Une autre méthode connue pour l'ajonction d'un insert dans un panneau de structure du type sandwich à âme alvéolaire, consiste à souder ou à coller l'insert sur les bords du panneau.

Il est aussi possible de renforcer la structure composite en ajoutant des peaux qui sont collées par dessus l'endroit à renforcer ou à boucher.

Par ailleurs, on connaît du document US 5 614 285 un procédé pour réaliser un panneau composite, comprenant un mat de lin et de fibres thermoplastiques surmonté d'une peau et d'une couche de décoration.

Selon ce procédé, on fixe au panneau, du côté du mat, un ou plusieurs éléments de fixation comportant une pluralité d'oeillets avec des picots qui s'étendent perpendiculairement à l'élément de fixation.

L'élément de fixation est monté dans le moule, pour être placé contre le mat, et lors du pressage du panneau par fermeture du moule, lesdits picots de l'élément de fixation s'enfoncent dans le mat en étant déviés de manière à s'orienter selon une direction généralement parallèle au plan dudit panneau.

Lors du refroidissement du panneau ainsi formé, les picots sont noyés dans le mat et ne viennent pas interférer avec les couches supérieures recouvrant le mat, c'est-à-dire avec la peau et la couche de décoration.

Un tel panneau n'est pas utilisable dans le domaine de l'automobile, du fait que sa structure à une peau et à un mat de lin ne lui confère pas la résistance mécanique recherchée pour constituer une pièce de véhicule automobile.

Enfin, on connaît du document FR - 2 686 043 un procédé de réalisation d'un panneau de structure composite du type sandwich à âme alvéolaire, comprenant des inserts métalliques, qui consiste à préchauffer les peaux constituant le matériau sandwich afin de les rendre malléables et de favoriser leur accrochage par thermosoudage aux alvéoles de l'âme alvéolaire, et à préchauffer le ou les inserts métalliques avant de réaliser un empilage des différents éléments dudit panneau dans un outillage de mise en forme de celui-ci.

Toutes les méthodes précitées déjà connues pour mettre en place des inserts dans un panneau de structure composite du type sandwich à âme alvéolaire, sont difficilement applicables dans le domaine de la construction automobile, où les cadences de production sont élevées, car toutes ces méthodes sont relativement longues à mettre en oeuvre et la réalisation de tels panneaux par de telles méthodes présente un coût trop élevé.

En particulier, la pose d'inserts et de renforts selon les méthodes précitées nécessite souvent un travail manuel ou des machines spéciales, ainsi que de la matière faisant lien comme des colles, des résines, des mousses de remplissage. Ces étapes de pose d'inserts sont alors obligatoirement des étapes de reprise qui constituent des coûts supplémentaires des procédés de fabrication.

En outre, selon les méthodes précitées déjà connues, les inserts utilisés sont réalisés généralement en matières souvent différentes de celles utilisées pour réaliser le panneau composite à structure sandwich, ce qui limite les possibilités de recyclage ultérieur dudit panneau à l'intérieur duquel sont placés ces inserts.

La présente invention propose alors un nouveau procédé de réalisation d'une zone rigidifiée formant insert destinée à accueillir un système de fixation à l'intérieur d'un panneau de structure composite du type sandwich à âme alvéolaire, dont la mise en oeuvre est simple et économique.

Plus particulièrement, selon l'invention, il est prévu un procédé pour réaliser une zone rigidifiée formant insert destiné à accueillir un système de fixation à l'intérieur d'un panneau composite du type sandwich comportant un empilement d'au moins une première peau, une âme alvéolaire en matériau thermoplastique et une deuxième peau, les première et deuxième peaux étant constituées de fibres de renfort et d'un matériau thermoplastique.

Il est caractérisé en ce qu'il comprend les étapes suivantes :
a) On positionne une platine de renfort à un endroit déterminé sur la face interne d'une partie d'un moule de formage, ladite platine étant pourvue de picots qui s'étendent en direction de l'autre partie dudit moule,
b) On place dans le moule de formage ledit empilement, lesdites première et deuxième peaux étant préalablement chauffées,
c) On presse ledit empilement par fermeture du moule de formage, sous une pression de formage comprise entre 1 et 3 MPa, pour simultanément former ledit panneau de sorte que ledit panneau épouse la forme de la platine de renfort qui s'ancre par l'intermédiaire de ses picots dans ce dernier, et effectuer à l'endroit déterminé où est positionnée ladite platine de renfort, un compactage localisé par compression dudit empilement.

Ainsi, de manière avantageuse, le procédé de réalisation de cette zone rigidifiée destinée à accueillir un système de fixation, s'intègre dans le processus de formage du panneau de sorte que le procédé global de fabrication du panneau à réaliser comporte un minimum d'étapes et est le moins coûteux possible.

Un tel procédé permet d'obtenir une zone rigidifiée in situe dans le panneau sans alourdir inutilement celui-ci.

Il permet en outre d'obtenir un panneau facilement recyclable car la platine de renfort pouvant être avantageusement métallique, est située à l'extérieur du panneau et il sera possible ultérieurement de séparer facilement le matériau composite de la platine de renfort.

Le fait que la platine s'ancre dans le panneau composite, et plus particulièrement dans une des peaux du matériau sandwich, par l'intermédiaire de ses picots, permet lors des sollicitations mécaniques du système de fixation accueilli dans ladite zone rigidifiée, de solliciter directement en traction la peau contre laquelle la platine est plaquée, les peaux dudit matériau sandwich présentant comme on le sait les meilleures propriétés mécaniques en traction.

L'accrochage mécanique par l'intermédiaire des picots de la platine de renfort sur la peau peut toutefois surprendre l'homme du métier car cela suppose a priori de nuire à l'intégrité de la structure composite du type sandwich. Mais tout au contraire, il sera démontré ultérieurement par des résultats d'essais que selon l'invention, l'intégrité du panneau composite n'est pas affectée.

L'étape c) du procédé selon l'invention permet en outre d'augmenter encore la résistance aux fortes sollicitations mécaniques de la zone rigidifiée ainsi réalisée.

Plus particulièrement, selon le procédé conforme à l'invention, la platine de renfort qui recouvre le panneau composite localement compacté et remonte sur ses bords, augmente la résistance en flexion du panneau là où elle pourrait être affaiblie par l'écrasement dudit panneau.

Selon une caractéristique avantageuse du procédé selon l'invention, la platine de renfort étant pourvue d'au moins un orifice traversant, à l'étape c), simultanément au formage dudit panneau, on transperce, via ledit orifice de ladite platine de renfort, ledit empilement à l'endroit de la réalisation du compactage localisé, en écartant à cet endroit les fibres de la première puis de la deuxième peau.

Ainsi, selon l'invention, l'opération de perçage dudit panneau n'entraîne pas la coupure des fibres qui sont seulement écartées, et le panneau conserve à l'endroit où est réalisée l'ouverture toutes ses qualités mécaniques. De plus, l'opération de .perçage est avantageusement effectuée simultanément avec l'opération de formage dudit panneau, le nombre d'étapes nécessaires pour fabriquer la pièce est donc diminué et par là même son coût de fabrication.

Par ailleurs, la platine de renfort augmente la résistance au matage et au cisaillement de l'ouverture ainsi réalisée lors de sollicitations mécaniques du système de fixation accueilli dans cette ouverture de la zone rigidifiée.

Selon un premier mode de réalisation du procédé conforme à l'invention, on utilise une platine de renfort dont les picots s'étendent suivant une direction perpendiculaire à la surface de la platine qui les porte.

Selon un autre mode de réalisation du procédé conforme à l'invention, on utilise une platine de renfort dont les picots s'étendent suivant une direction inclinée par rapport à la normale à la surface de la platine qui les porte.

En effet, les picots placés perpendiculairement à la surface de la platine de renfort ne permettent pas dans certains cas de maintenir la platine en place pour peu qu'elle soit sollicitée dans le sens des picots, lors de la manipulation et du transport du panneau formé. De plus, en cas d'utilisation extrême, on constate que certains picots se déforment avant que le panneau composite ne se déchire.

A ces deux problèmes précités, une solution peut être, comme précédemment exposée, l'utilisation de picots inclinés par rapport au plan de la surface de la platine qui les porte.

Dans ce cas, à l'étape a), la platine de renfort est positionnée sur une portion mobile d'une partie du moule de formage, et à l'étape c), lors de la fermeture du moule de formage par déplacement vertical de ladite partie du moule vers son autre partie, la portion mobile se déplace sur un plan incliné par rapport au plan de la surface interne de ladite partie du moule de sorte que la platine de renfort présente un mouvement horizontal et les picots s'insèrent dans ledit empilement suivant leur direction d'inclinaison.

L'insertion des picots dans l'empilement formé se fait alors sans abîmer les fibres de renfort de la peau.

Selon une caractéristique du procédé selon l'invention, les première et deuxième peaux utilisées étant constituées par un tissu de fibres de renfort noyées dans un matériau thermoplastique, dans lequel les fils de chaîne sont orientés à 90° par rapport aux fils de trame, on utilise une platine de renfort dont les picots sont positionnés de sorte qu'à l'étape c), ils s'insèrent dans l'empilement en se positionnant en appui sur les fils de chaîne de la peau contre laquelle la platine de renfort est plaquée.

Selon une variante du procédé conforme à l'invention, les première et deuxième peaux utilisées étant constituées par un tissu de fibres de renfort noyées dans un matériau thermoplastique, on utilise une platine dont les picots sont positionnés de façon qu'à l'étape c), ils s'insèrent dans l'empilement en se positionnant en quinconce contre les fils de trame de la peau contre laquelle la platine de renfort est plaquée.

Selon une caractéristique avantageuse du procédé conforme à l'invention, à l'étape a), on positionne une autre platine de renfort sur la face interne de l'autre partie du moule de formage, en regard de la platine de renfort positionnée sur la face interne de la première partie dudit moule, l'autre platine de renfort étant pourvue d'une part de picots qui, lorsque lesdites platines sont en position dans le moule, s'étendent en direction de la première platine de renfort, et sont destinés à l'étape c), à s'ancrer dans le panneau, et d'autre part de logements s'insérant également dans le panneau lors de l'étape c) et dans lesquels sont destinés à s'engager des picots de plus grande longueur portés par la première platine de renfort de sorte qu'après formage dudit panneau, les deux platines sont liées l'une à l'autre par sertissage.

Selon d'autres caractéristiques du procédé conforme à l'invention, chaque platine de renfort peut présenter une épaisseur comprise environ entre 0,8 et 1,2 mm et les picots qu'elles comprennent sont alors réalisés par emboutissage du matériau de ladite platine. A l'étape c), le compactage localisé dudit empilement peut être effectué à l'aide d'au moins un bossage prévu sur au moins une partie du moule de formage. Préalablement au compactage localisé du panneau, on chauffe un pré-assemblage constitué par l'empilement d'au moins la première peau, l'âme alvéolaire et la deuxième peau. Lors du chauffage du pré-assemblage, on peut réaliser un échauffement plus accentué de la zone- localisée du pré-assemblage où s'effectuera ultérieurement le compactage localisé par compression. A l'étape c), les première et deuxième peaux présentent une température de formage comprise entre 160 et 200°C environ.

A l'étape c), on transperce ledit empilement qui s'effectue selon une direction perpendiculaire au plan formé par lesdites peaux ou encore selon une direction oblique par rapport à la normale au plan formé par lesdites peaux.

Selon l'invention, il est également prévu un dispositif pour la mise en oeuvre du procédé précité comprenant un moule de formage, caractérisé en ce qu'il comporte un pointeau monté sur une paroi interne du moule de sorte qu'il s'étend en direction de l'autre paroi en regard dudit moule où il est prévu un logement dans lequel s'engage ledit pointeau lorsqu'il transperce ledit empilement en cours de formage. Le pointeau est avantageusement monté mobile sur la paroi supérieure du moule de sorte qu'il descende en direction dudit logement correspondant après que lesdites première et deuxième peaux de l'empilement aient été pincées entre lesdites parois du moule. Ce pointeau comprend un fût se terminant par une pointe dont les formes et dimensions sont adaptées à la forme et aux dimensions d'ouverture traversante à réaliser, cette pointe présentant une forme conique ou encore une forme d'aiguille avec une face plate et une face courbe.

Enfin, l'invention propose également un panneau de structure composite du type sandwich, comportant un empilement d'au moins une première peau, une âme alvéolaire en matériau thermoplastique et une deuxième peau, ledit panneau étant pourvu d'au moins une zone rigidifiée formant insert destinée à accueillir un système de fixation, réalisée suivant le procédé précité.

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue schématique éclatée en coupe de côté d'une zone rigidifiée d'un panneau composite à structure sandwich à âme alvéolaire selon l'invention,
- les figures 2a et 2b sont des vues schématiques de dessus d'une zone rigidifiée telle que représentée en éclatée sur la figure 1, sur lesquelles deux positions différentes de picots sont représentées,
- les figures 3a et 3b sont des vues de face et de profil d'un mode de réalisation d'un picot d'une platine de renfort utilisée selon le procédé conforme à l'invention,
- les figures 4a et 4b sont des vues de dessus et de côté d'un mode de positionnement des picots d'une platine de renfort sur un fil de trame conformément au procédé selon l'invention,
- la figure 5 représente schématiquement l'insertion d'un picot incliné et d'un picot droit dans un panneau composite de structure sandwich à âme alvéolaire,
- la figure 6 montre les parties supérieure et inférieure du moule de formage utilisé conformément au procédé selon l'invention, la partie supérieure étant pourvue d'une platine de renfort à picots inclinés,
- la figure 7 représente schématiquement vu en coupe de côté la zone rigidifiée d'un panneau de structure sandwich à âme alvéolaire comportant une platine de renfort supérieure et une platine de renfort inférieure selon le procédé conforme à l'invention,
- les figures 8a, 8b et 8c montrent un mode de réalisation d'une platine de renfort utilisée conformément au procédé selon l'invention,
- la figure 9 représente un montage d'essais en traction sur une éprouvette réalisée conformément au procédé selon l'invention, et
- la figure 10 représente schématiquement vu de dessus cinq platines de renfort différentes utilisées pour les essais en traction selon le schéma représenté à la figure 9.

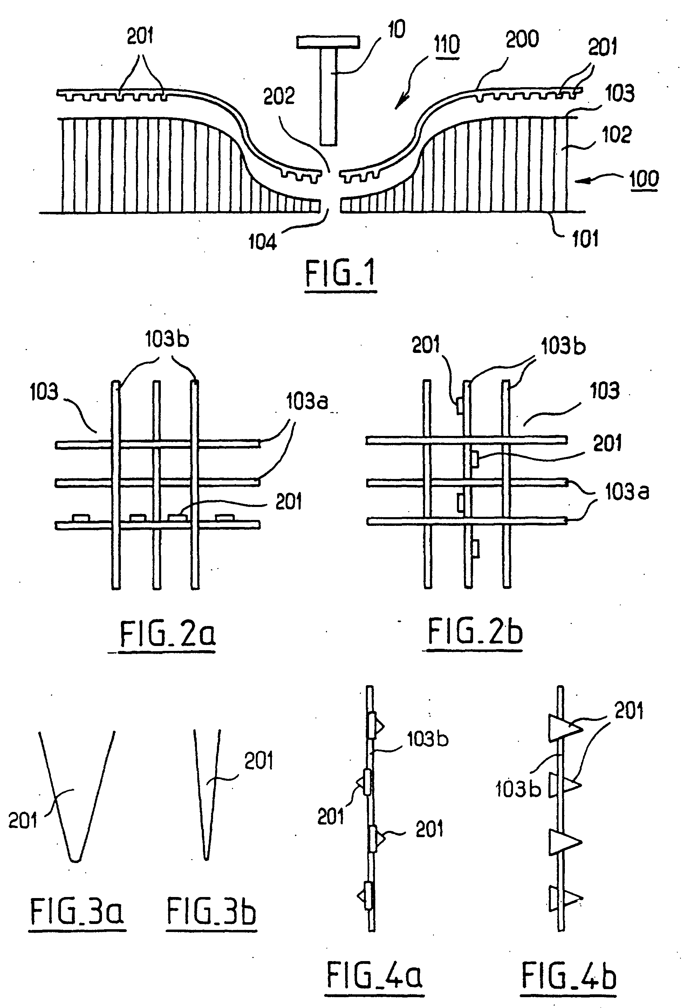

Sur la figure 1 on a représenté schématiquement une zone rigidifiée 110 formant insert destinée à accueillir un système de fixation 10 à l'intérieur d'un panneau composite du type sandwich 100. Ce panneau composite 100 comprend un empilement d'au moins une première peau 101, une âme alvéolaire 102 en matériau thermoplastique et une deuxième peau 103. L'âme alvéolaire 102 est constituée par des alvéoles géométriques de forme déterminée régulièrement espacées et délimitées par des parois fines de matériau thermoplastique tel que du polypropylène. Les alvéoles peuvent présenter une forme tubulaire ou encore une forme hexagonale, dans ce dernier cas, l'âme alvéolaire sera du type nid d'abeilles. Les première et deuxième peaux 101, 103 du panneau composite 100 représenté sont constituées de fibres de renfort, en verre, ou autre matière minérale ou organique telle que de la matière végétale, et d'un matériau thermoplastique. Avantageusement dans le cas typique représenté les première et deuxième peaux 101, 103 sont constituées par un tissu de fibres de verre noyées dans du polypropylène et plus particulièrement un tissu équilibré dans lequel il y a autant de fils de trame que de fils de chaîne orientés à 90° les uns par rapport aux autres.

Bien entendu, selon d'autres modes de réalisation non représentés, on peut envisager d'utiliser pour la réalisation du panneau composite, des première et deuxième peaux dont le tissage serait différent ou encore constituées par un mat de fibres de renfort noyées dans un matériau thermoplastique tel que du polypropylène.

Comme le montre la figure 1, selon l'invention, la zone rigidifiée 110 du panneau 100 est constituée par un compactage localisé du panneau composite 100, cette zone compactée étant recouverte d'une platine de renfort 200, avantageusement en métal, appliquée contre la deuxième peau 103 en épousant la forme de la zone compactée, et ancrée par l'intermédiaire de picots 201 dans ledit panneau.

Selon l'invention, le procédé pour réaliser une telle zone rigidifiée comprend les étapes suivantes :
a) on positionne la platine de renfort 200 à un endroit déterminé sur la face interne d'une partie d'un moule de formage, ici la partie supérieure du moule, ladite platine de renfort 200 étant pourvue de picots 201 qui s'étendent en direction de l'autre partie, ici inférieure, dudit moule,
b) on place dans le moule de formage ledit empilement, lesdites première et deuxième peaux 101, 103 étant préalablement chauffées,
c) on presse ledit empilement par fermeture du moule de formage, pour former ledit panneau, et simultanément au formage dudit panneau, on effectue, à l'endroit déterminé où est positionnée ladite platine de renfort 200, un compactage réalisé par compression, sous une pression de compactage compris entre 1 et 3 MPa, dudit empilement, placé ici sous la platine de renfort, de sorte qu'il épouse la forme de la platine de renfort préformée qui s'ancre par l'intermédiaire de ses picots dans ledit panneau.

Il est à noter, qu'avantageusement selon ce procédé, préalablement à l'étape b), on chauffe un pré-assemblage constitué par l'empilement d'au moins la première peau 101, l'âme alvéolaire 102 et la deuxième peau 103. Lors du chauffage du pré-assemblage, on réalise un échauffement plus accentué de la zone localisée dudit pré-assemblage où s'effectuera ultérieurement le compactage localisé par compression. La température de chauffage du pré-assemblage est telle qu'à l'étape c), les première et deuxième peaux présentent une température de formage comprise entre 160 et 200°C environ.

Comme le montre la figure 1, la zone rigidifiée 110 est percée d'un orifice traversant 104 pour la mise en place ultérieure d'un système de fixation ici, par exemple, une vis 10. Pour réaliser la zone rigidifiée percée conformément au procédé conforme à l'invention, la platine de renfort 200 est pourvue d'au moins un orifice traversant 202, et à l'étape c), simultanément au formage dudit panneau, on transperce, via ledit orifice 202 de la platine 200, ledit empilement à l'endroit de la réalisation du compactage localisé, en écartant à cet endroit les fibres de la première puis de la deuxième peau 101, 103.

Avantageusement, on notera que la réalisation de la zone rigidifiée par compactage du panneau recouvert d'une platine de renfort, le perçage à cet endroit de la zone rigidifiée, et le formage du panneau s'effectuent en une seule étape lors du formage par pressage dudit panneau, ce qui permet d'obtenir un procédé de fabrication avec un minimum d'étapes et donc d'un coût réduit.

La réalisation de l'orifice traversant dans la zone rigidifiée, peut s'effectuer selon l'invention en transperçant ledit empilement à l'étape c) selon une direction perpendiculaire au plan formé par lesdites peaux 101, 103 ou encore selon une direction oblique par rapport à la normale au plan formé par lesdites peaux. Pour se faire, un pointeau non représenté peut être monté sur une paroi interne du moule de sorte qu'il s'étend en direction de l'autre paroi interne en regard dudit moule où il est prévu un logement, également non représenté, dans lequel s'engage ledit pointeau lorsqu'il transperce ledit empilement au cours du formage. Le pointeau peut être monté mobile sur la paroi supérieure du moule de sorte qu'il descende en direction dudit logement correspondant après que lesdites première et deuxième peaux de l'empilement aient été pincées entre lesdites parois du moule. En outre, le pointeau comprend un fût se terminant par une pointe dont les formes et les dimensions sont adaptées à la forme et aux dimensions d'ouverture traversante à réaliser. Par exemple, la pointe peut présenter une forme conique ou encore une forme d'aiguille avec une face plate et une face courbe.

Par ailleurs, il est à noter qu'à l'étape c), le compactage localisé dudit empilement a été effectué à l'aide d'au moins un bossage prévu sur au moins une paroi du moule de formage.

Ce bossage peut de manière préférentielle être constitué par la platine de renfort 200 préformée à la forme du bossage, si celle-ci est suffisamment rigide pour, lors de l'étape de pressage, compacter ledit empilement.

Comme cela a déjà été dit précédemment, pour fixer la platine de -renfort 200 sur la peau 103 qui la supporte, il est prévu selon l'invention d'utiliser une platine de renfort 200 portant des picots 201 destinés, lors de la mise en forme du panneau, à s'ancrer à l'intérieur de celui-ci. Pour que l'accrochage des picots de la platine de renfort 200 soit efficace sans pour autant endommager les fibres de la peau qu'ils traversent, il est préférable que les picots aient une forme et des dimensions adaptées au type de peau utilisée. En outre, leur disposition les uns par rapport aux autres sur la platine de renfort, est également importante parce qu'elle conditionne en partie la capacité de la platine à résister aux efforts de traction.

Les figures 2a et 2b, 4a et 4b montrent deux possibilités de disposition des picots sur la platine de renfort utilisée dans le procédé selon l'invention et de ce fait d'accrochage de ces picots aux fibres de la peau utilisée.

Comme le montre les figures 2a et 2b, la peau 103 utilisée est constituée ici par un tissu équilibré de fibres de renfort 103a, 103b, telles que des fibres de verre, des fibres végétales ou encore des fibres de carbone, noyées dans un matériau thermoplastique tel que du polypropylène, dans lequel il y a autant de fils de trame 103b que de fils de chaîne 103a orientés à 90° les uns par rapport aux autres. Ainsi, selon un premier mode de réalisation du procédé conforme à l'invention, on utilise alors une platine de renfort 200 dont les picots 201 sont positionnés de sorte qu'à l'étape c), ils s'insèrent dans l'empilement en se plaçant en appui sur les fils de chaîne 103a de la peau 103 contre laquelle la platine de renfort 200 est plaquée (voir figures 2a).

Une telle disposition des picots sur la platine est prévue lorsque les sollicitations mécaniques exercées sur ladite zone rigidifiée sont dirigées majoritairement suivant le sens des fils de chaîne.

Selon un autre mode de réalisation, il peut être prévu que les picots 201 soient placés sur la platine de renfort 200 utilisée de sorte que lors de l'étape c), lesdits picots 201 s'insèrent dans l'empilement en se positionnant en quinconce contre les fils de trame 103b de la peau 103 contre laquelle la platine de renfort 200 est plaquée (voir figures 2b, 4a et 4b).

Une telle disposition des picots sur la platine est prévue lorsque les sollicitations mécaniques exercées sur ladite zone rigidifiée sont dirigées majoritairement suivant le sens des fils de trame.

Bien entendu, pour des efforts mécaniques répartis de façon plus complexe sur la zone rigidifiée, on pourra envisager selon l'invention d'utiliser une platine de renfort pourvue de picots répartis de manière plus ou moins uniforme, venant se positionner contre les fils de chaîne et en quinconce contre les fils de trame de la peau de ladite zone.

De plus, pour d'autres types de tissages ou pour des mats de fibres de verre noyées dans du polypropylène, le positionnement des picots sur la platine de renfort utilisée conformément au procédé selon l'invention, sera différent.

Par ailleurs, selon un mode de réalisation du procédé selon l'invention, il est prévu d'utiliser une platine de renfort dont les picots s'étendent suivant une direction perpendiculaire à la surface de la platine qui les porte.

Dans ce cas, comme le montrent les figures 3a et 3b, les picots 201 de la platine de renfort utilisée présentent une forme de pointe dont la base a une largeur inférieure ou égale sensiblement à la largeur d'un fil d'un tissu calandré de fibres de verre noyées dans un matériau thermoplastique.

Les picots 201 écartent alors les fibres de la peau en en entraînant le moins possible lors de leur pénétration dans cette dernière. Les picots 201 présentent une surface de matage suffisante pour s'appuyer sur les fibres sans les trancher.

Bien sûr, pour d'autres types de tissages, ou pour des mats, les dimensions et la forme des picots seront adaptées en conséquence.

Toutefois, de tels picots placés perpendiculairement à la surface de la platine de renfort qui les porte, ne permettent pas dans certains cas de maintenir la platine en place contre la peau de l'empilement pour peu qu'elle soit sollicitée dans le sens des picots, lors de la manipulation et le transport. Dans certains cas d'utilisation, il se peut que certains picots se déforment avant que le panneau composite thermoformé ne se déchire.

Afin de pallier ce problème, selon une variante du procédé selon l'invention, on utilise une platine de renfort dont les picots s'étendent suivant une direction inclinée par rapport à la normale à la surface de la platine qui les porte.

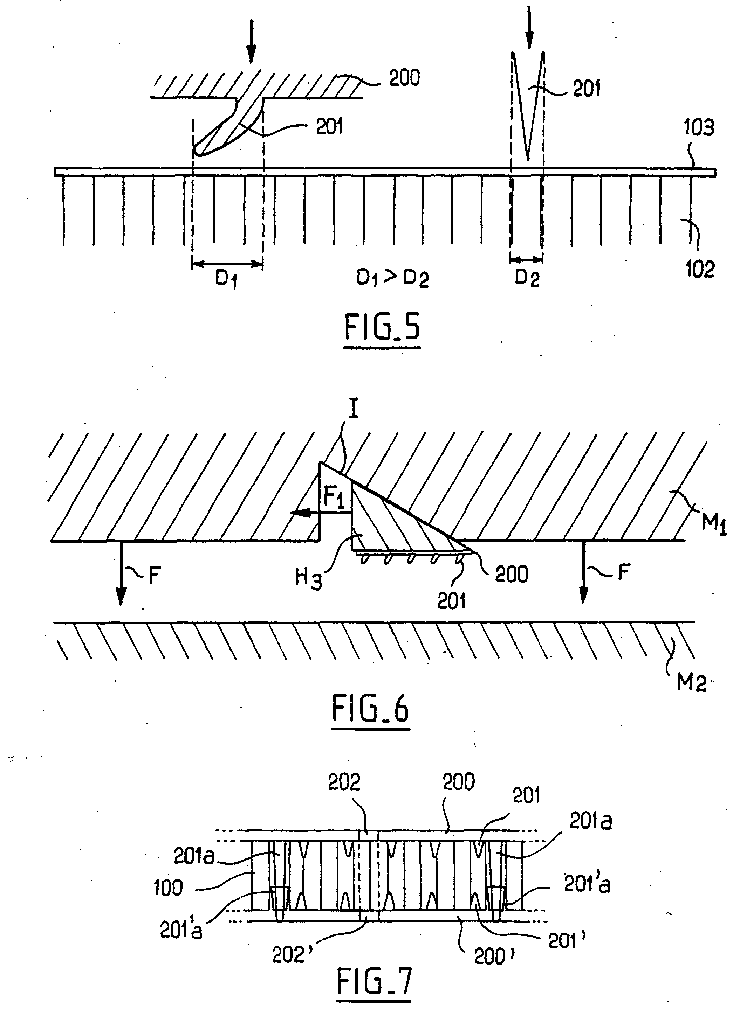

Sur la figure 5, on a représenté l'insertion d'un picot 201 d'une platine de renfort 200, droit et incliné, dans le panneau 100 composite. On peut voir sur cette figure que la zone de la peau transpercée par les picots, est beaucoup plus importante lorsque le picot 201 est incliné que lorsque le picot 201 est droit. En effet, lorsque le picot 201 est incliné par rapport à la normale à la surface de la platine de renfort qui les porte, la zone D₁ concernée de la peau est plus importante que la zone D₂ transpercée par un picot 201 droit. Afin de limiter cette zone D₁ transpercée par des picots inclinés de la platine de renfort utilisée, il faut introduire les picots dans l'empilement lors de l'étape de pressage dudit panneau, selon leur direction d'inclinaison. Ainsi, les picots 201 pénétreront dans l'empilement sans abîmer les fibres de la peau qu'ils transpercent.

Pour se faire, conformément à l'invention, et comme cela est plus particulièrement représenté sur la figure 6, à l'étape a), la platine de renfort 200 comportant les picots 201 inclinés, est positionnée ici sur une portion mobile M₃ de la partie supérieure M₁ du moule de formage et à l'étape c), lors de la fermeture du moule de formage par déplacement vertical selon les flèches F de la partie supérieure M₁ vers sa partie inférieure M₂, la portion mobile M₃ se déplace sur un plan incliné I par rapport au plan de la surface interne de la partie supérieure M₁ de sorte que ladite platine de renfort 200 présente un mouvement horizontal selon la flèche F₁ et les picots 201 s'insèrent dans ledit empilement selon leur direction d'inclinaison.

Ces picots pénétreront alors dans la peau, comme dans le cas des picots verticaux, selon leur direction d'orientation.

Que les picots soient inclinés ou non, positionnés de manière à prendre appui sur les fils sens trame ou chaîne de la peau qu'ils transpercent, il se peut qu'ils ne puissent pas, dans certains cas de sollicitations mécaniques élevées, assurer par eux-mêmes la fixation de la platine de renfort à l'empilement.

Avantageusement, il est alors prévu de relier cette platine de renfort 200 à une autre platine.

Ainsi, dans ce cas, comme le montre la figure 7, conformément au procédé selon l'invention, à l'étape a), on positionne une autre platine de renfort 200' sur la face interne de l'autre partie du moule de formage, ici la partie inférieure, en regard de la platine de renfort 200 positionnée sur la face interne de la partie supérieure du moule, l'autre platine de renfort 200' étant également pourvue de picots 201' qui, lorsque les platines sont en position dans le moule, s'étendent en direction de la première platine de renfort 200. Ces picots sont destinés à l'étape c) à s'ancrer dans le panneau. L'autre platine de renfort 200' comporte en outre des logements 20l'a s'insérant également dans le panneau lors de l'étape c), et dans lesquels sont destinés à s'engager des picots 201a de plus grande longueur portés par ladite première platine de renfort 200 de sorte qu'après le formage dudit panneau, les deux platines 200, 200' sont liées l'une à l'autre par sertissage. Ainsi, en cas de déformation en flexion du panneau formé, les deux platines de renfort sont solidaires, et on évite alors le cisaillement dudit panneau grâce à la déformation de l'ensemble.

On notera ici que le panneau n'est pas compacté à l'endroit de la zone rigidifiée qui comporte alors seulement les deux platines de renfort placées sur les deux faces du panneau formé, liées l'une à l'autre par sertissage. Dans certains cas cependant, il pourra s'avérer utile de compacter le panneau à l'endroit où sont placées les deux platines de renfort pour augmenter encore la résistance aux sollicitations mécaniques de la zone rigidifiée ainsi réalisée.

Les picots 201a de plus grande longueur, utilisés pour le sertissage, doivent être prévus suffisamment fins pour passer à travers le tissu constituant lesdites peaux sans les endommager. Ces picots 201a peuvent être tout simplement de la même forme que les picots 201.

Ils peuvent être aussi des clous de sertissage.

Il est bien entendu que l'autre platine de renfort 200', positionnée sur la face interne de l'autre partie du moule de formage, est pourvue au moins d'un orifice traversant 202' qui vient se positionner en regard de l'orifice traversant 202 de la première platine de renfort 200 de sorte qu'à l'étape c), simultanément au formage dudit panneau, on transperce, via lesdits orifices des platines, ledit empilement à l'endroit de la réalisation du compactage localisé, en écartant à cet endroit les fibres de la première puis de la deuxième peau.

Les platines de renfort 200, 200' utilisées présentent une épaisseur qui est comprise ici environ entre 0,8 et 1,2 mm, et les picots qu'elles comprennent sont réalisés par emboutissage du matériau des platines. En effet, pour une production en grande série, les picots sont réalisés par emboutissage. Il faut donc que la platine soit emboutissable, ce qui fixe l'épaisseur maximale de celle-ci.

La résistance de la zone rigidifiée comprenant le système de fixation, aux sollicitations mécaniques, dépend de la nature des peaux de l'empilement, de la qualité de l'accrochage de la ou les platines aux peaux, mais aussi de la capacité qu'a(ont) la ou les platines de résister aux sollicitations, en particulier au niveau de l'orifice traversant par lequel passe la vis de fixation 10 reliant ledit panneau à un châssis.

Pour augmenter la résistance des platines, il peut s'avérer qu'il soit nécessaire, dans certains cas, d'augmenter l'épaisseur de la platine au delà de la limite maximum admissible, pour que ladite platine puisse être réalisée par emboutissage.

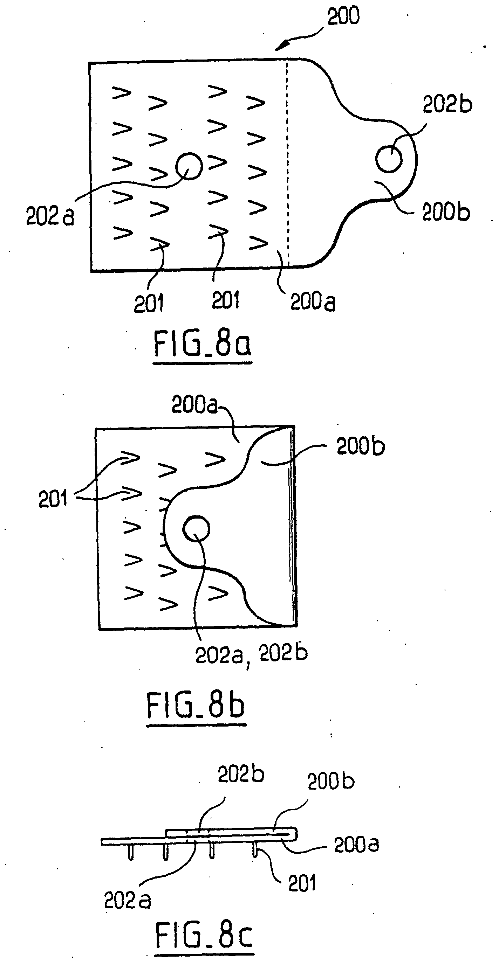

Ainsi, selon l'invention, pour augmenter l'épaisseur de la platine de renfort réalisée par emboutissage, on utilise une platine de renfort 200 comme le montrent les figures 8a à 8c, qui comporte une première partie 200a munie de picots 201 et d'un orifice traversant 202a, et une deuxième partie rabattable 200b percée d'un orifice 202b venant en regard de celui prévu dans la première partie 200a (voir figure 8b) lorsque celle-ci est rabattue sur la première partie. Cette partie rabattable 200b peut avoir une épaisseur différente de la première partie munie des picots 201 et donc il est possible de moduler l'épaisseur totale de la platine. Dans le cas représenté, la partie rabattable ne recouvre pas entièrement la première partie de la platine mais, pour un souci d'esthétique, il peut être prévu que cette partie rabattable vienne recouvrir totalement la première partie munie des picots.

Le procédé selon l'invention, tel que décrit précédemment, permettant de réaliser un panneau composite du type sandwich à âme alvéolaire muni d'une zone rigidifiée, présente les avantages suivants.

La réalisation de la zone rigidifiée munie d'une ou deux platines de renfort s'effectue en une seule étape lors du formage dudit panneau, par la réalisation d'un compactage localisé, et simultanément au perçage de ladite zone. Il n'est donc pas nécessaire d'effectuer la mise en place de la platine lors d'une étape de reprise, et le procédé de fabrication du panneau thermoformé se fait en un minimum d'étapes et présente ainsi un coût minimum. La ou les platines préformées ou non, sont positionnées dans le moule avant la fermeture dudit moule, pendant le temps de chauffe de l'âme et de la peau constituant ledit empilement. L'utilisation d'une platine munie de picots permet d'accrocher et de solliciter les fibres de la peau contre laquelle elle s'appuie, en traction. Ceci est particulièrement avantageux lorsque l'on sait que les peaux dudit empilement présentent une meilleure qualité de résistance à la traction que l'âme alvéolaire. Les picots utilisés ont une forme étudiée de sorte qu'ils glissent et se coincent entre deux fils longitidinaux et s'appuient sur un fil transversal en brisant un minimum de fibres. L'intégrité du tissu constituant lesdites peaux est alors quasiment préservée. La platine de renfort ajustée sur l'empilement compacté, et utilisée avec une autre platine positionnée en vis-à-vis, reprend une partie des efforts en flexion exercés sur ledit panneau, redonnant à celui-ci une partie de sa rigidité perdue localement par le compactage. Comme l'épaisseur de ces platines de renfort détermine la valeur de la rigidité que l'on souhaite apporter à la pièce, on peut la moduler, afin d'éviter d'avoir lors de sollicitations mécaniques élevées un cisaillement de ladite pièce au niveau de son système de fixation.

La platine de renfort, réalisée en métal par exemple, est la seule matière différente ajoutée au panneau composite du type sandwich. Elle est déposée par l'extérieur sur ou sous le matériau sandwich. Elle peut être alors facilement retirée lors d'opérations de recyclage de la pièce. Dans le cas d'une platine à picots verticaux, celle-ci a une faible tenue en traction permettant de la retirer à la main ou à l'aide d'un levier, mais suffisante pour la maintenir en place lors de sa manipulation et de son montage. Dans le cas d'une platine à picots inclinés, l'effort est plus important mais ne nécessite pas autre chose, là encore, qu'un levier ou un burin pour éliminer la platine de l'empilement lors d'une opération de recyclage. Si les platines sont serties l'une à l'autre, le démontage nécessitera probablement un outil qui permettra de les séparer.

Cependant, dans tous ces cas de figure, une fois cette opération réalisée, les parties métalliques sont complètement séparées du matériau composite. Les platines de renfort utilisées sont relativement simples à réaliser par emboutissage et donc peu coûteuses. Elles peuvent être réalisées en grande série.

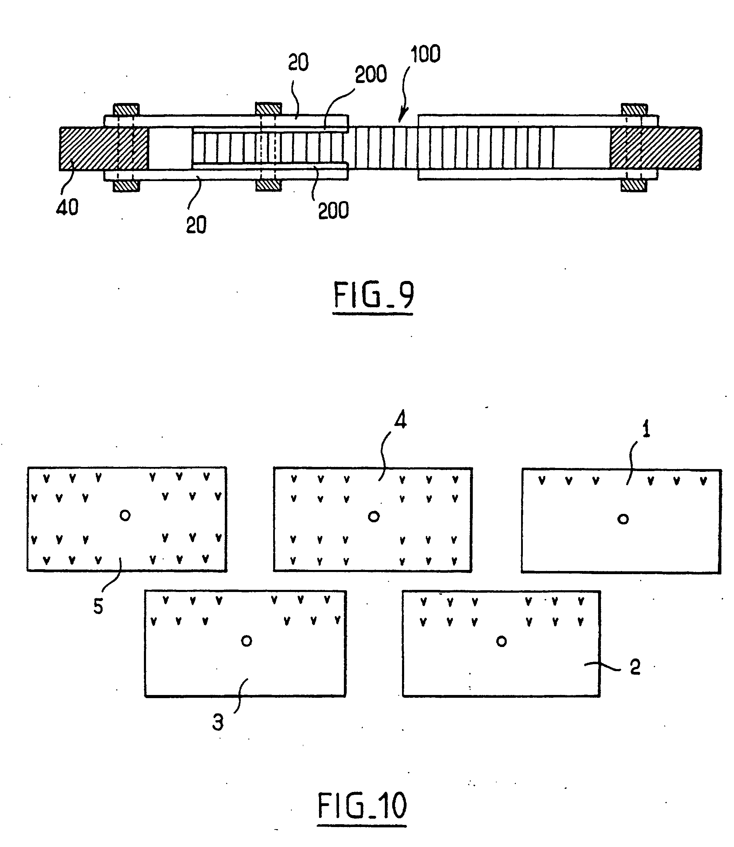

Des essais en traction ont été réalisés sur une éprouvette d'un panneau composite du type sandwich selon l'invention dans lequel les première et deuxième peaux sont constituées par un tissu équilibré de densité 1420 g/m². Cinq types de platines ont été utilisés, représentées plus particulièrement sur la figure 10, et référencées de 1 à 5. Sur les différentes platines, la quantité de picots et leur position respectives les uns par rapport aux autres, varient.

Le dispositif d'essais en traction est représenté plus particulièrement sur la figure 9.

Comme le montre cette figure, afin de tester lesdites platines 1 à 5 représentées sur la figure 10, des contre-platines 20 ont été fabriquées spécialement pour ces essais. Ces dernières, une fois montées, recouvrent complètement la ou les platines à picots 200, leurs évitant ainsi de se déformer lors de l'essai. Ainsi, lors des essais en traction, tous les efforts sont absorbés par les picots desdites platines, et le trou qui a été fait dans l'éprouvett Ces essais ont permis d'évaluer la capacité d'un tel système de base (picots-peaux) à résister à l'effort, en fonction du nombre de picots des platines de renfort utilisées, et de leur position respective. A partir d'un mors de fixation 40, on a effectué des tractions sur les platines 200 par l'intermédiaire des contre-platines 20.

En comparant les résultats d'essais en traction effectués sur les différentes platines 1, 2, 4 ou 1, 3, 5, on a pu obtenir la valeur du nombre de picots minimum nécessaires par ligne. De plus, en comparant les résultats d'essais effectués sur les platines 2, 3 ou 4, 5, on a obtenu une indication sur l'influence de la position relative des picots entre eux. On a pu constater qu'une rangée de six picots et un trou de diamètre 8 par platine permet de supporter une charge à rupture d'environ 1200 daN, et d'atteindre les 2000 daN avec quatre rangées, avant que la platine de renfort métallique ne cède.

## Revendications

1. Procédé pour réaliser une zone rigidifiée. (110) formant insert destinée à accueillir un système de fixation (10) à l'intérieur d'un panneau (100) composite du type sandwich comprenant un empilement d'au moins une première peau (101), une âme alvéolaire (102) en matériau thermoplastique et une deuxième peau (103), lesdites première et deuxième peaux (101, 103) étant constituées de fibres de renfort et d'un matériau thermoplastique,
**caractérisé en ce qu'**il comprend les étapes suivantes:
a)on positionne une platine de renfort (200) à un endroit déterminé sur la face interne d'une partie d'un moule de formage, ladite platine (200) étant pourvue de picots (201) qui s'étendent en direction de l'autre partie dudit moule,
b)on place dans le moule de formage ledit empilement, lesdites première et deuxième peaux étant préalablement chauffées,
c)on presse ledit empilement par fermeture du moule de formage, sous une pression de formage comprise entre 1 et 3 MPa, pour simultanément former ledit panneau (100) de sorte que ledit panneau épouse la forme de la platine de renfort (200) qui s'ancre par l'intermédiaire de ses picots dans ce dernier, et effectuer à l'endroit déterminé où est positionnée ladite platine de renfort (200), un compactage localisé par compression dudit empilement.

2. Procédé selon la revendication 1, **caractérisé en ce que** la platine de renfort (200) étant pourvue d'au moins un orifice traversant (202), à l'étape c), simultanément au formage dudit panneau, on transperce, via ledit orifice (202) de ladite platine de renfort (200), ledit empilement à l'endroit de la réalisation du compactage localisé, en écartant à cet endroit les fibres de la première puis de la deuxième peaux.

3. Procédé selon l'une des revendications 1 ou 2, **caractérisé en ce qu'**on utilise une platine de renfort (200) dont les picots (201) s'étendent suivant une direction perpendiculaire à la surface de la platine qui les porte.

4. Procédé selon l'une des revendications 1 à 2, **caractérisé en ce qu'**on utilise une platine de renfort (200) dont les picots (201) s'étendent suivant une direction inclinée par rapport à la normale à la surface de la platine qui les porte.

5. Procédé selon la revendication 4, **caractérisé en ce qu'**à l'étape a) la platine de renfort (200) est positionnée sur une portion mobile (M₃) d'une partie (M₁) du moule de formage et à l'étape c) lors de la fermeture du moule de formage par déplacement vertical de ladite partie (M₁) du moule vers son autre partie (M₂), la portion mobile (M₃) se déplace sur un plan incliné (I) par rapport au plan de la surface interne de ladite partie (M₁) du moule de sorte que la platine de renfort (200) présente un mouvement horizontal et les picots (201) s'insèrent dans ledit empilement suivant leur direction d'inclinaison.

6. Procédé selon l'une des revendications 1 à 3, **caractérisé en ce que** les picots (201) de la platine de renfort (200) utilisée présentent une forme de pointe dont la base a une largeur inférieure ou égale sensiblement à la largeur d'un fil d'un tissu calandré de fibres de verre noyées dans un matériau thermoplastique.

7. Procédé selon l'une des revendications 1 à 6, **caractérisé en ce que** les première et deuxième peaux (101, 103) utilisées étant constituées par un tissu de fibres de renfort noyées dans un matériau thermoplastique, dans lequel les fils de chaîne (103a) sont orientés à 90° par rapport aux fils de trame (103b), on utilise une platine de renfort (200) dont les picots (201) sont positionnés de sorte qu'à l'étape c) ils s'insèrent dans l'empilement en se positionnant en appui sur les fils de chaîne (103a) de la peau (103) contre laquelle la platine de renfort (200) est plaquée.

8. Procédé selon l'une des revendications 1 à 7, **caractérisé en ce que** les première et deuxième peaux (101, 103) utilisées étant constituées par un tissu de fibres de renfort noyées dans un matériau thermoplastique, dans lequel les fils de chaîne (103a) sont orientés à 90° par rapport aux fils de trame (103b), on utilise une platine dont les picots (201) sont positionnés de façon qu'à l'étape c) ils s'insèrent dans l'empilement, en se positionnant en quinconce contre les fils de trame (103b) de la peau (103) contre laquelle la platine de renfort (200) est plaquée.

9. Procédé selon l'une des revendications 1 à 8, **caractérisé en ce qu'**à l'étape a) on positionne une autre platine de renfort (200') sur la face interne de l'autre partie du moule de formage, en regard de la première platine de renfort (200) positionnée sur la face interne de la première partie dudit moule, l'autre platine de renfort (200') étant pourvue d'une part de picots (201') qui, lorsque les platines (200, 200') sont en position dans le moule, s'étendent en direction de la première platine de renfort (200), et sont destinés à l'étape c) à s'ancrer dans le panneau, et d'autre part de logements (20l'a) s'insérant également dans le panneau lors de l'étape c) et dans lesquels sont destinés à s'engager des picots (201a) de plus grande longueur portés par la première platine de renfort (200) de sorte qu'après formage dudit panneau les deux platines sont liées l'une à l'autre par sertissage.

10. Procédé selon la revendication 9, **caractérisé en ce que** l'autre platine de renfort (200') est pourvue au moins d'un orifice traversant qui vient se positionner en regard de l'orifice traversant de la première platine de renfort de sorte qu'à l'étape c), simultanément au formage dudit panneau, on transperce, via lesdits orifices des platines, ledit empilement à l'endroit de la réalisation du compactage localisé, en écartant à cet endroit les fibres de la première puis de la deuxième peau.

11. Procédé selon l'une des revendications 1 à 10, **caractérisé en ce que** chaque platine de renfort (200) présente une épaisseur comprise environ entre 0,8 et 1,2 mm et les picots (201) qu'elles comprennent sont réalisés par emboutissage du matériau de ladite platine.

12. Procédé selon la revendication 11, **caractérisé en ce qu'**on utilise une platine de renfort (200) qui comporte une première partie (200a) munie des picots (201) et d'un orifice traversant (202a) et une deuxième partie rabattable (200b) percée d'un orifice (202b) venant en regard de celui prévu dans la première partie (200a) munie des picots lorsque celle-ci est rabattue sur la première partie.

13. Procédé selon l'une des revendications 1 à 12, **caractérisé en ce qu'**à l'étape c) le compactage localisé dudit empilement est effectué à l'aide d'au moins un bossage prévu sur au moins une paroi du moule de formage.

14. Procédé selon la revendication 13, **caractérisé en ce que** le bossage est constitué par la platine de renfort (200) préformée à la forme dudit bossage.

15. Procédé selon l'une des revendications 1 à 14, **caractérisé en ce que** préalablement au formage du panneau, on chauffe un pré-assemblage constitué par l'empilement d'au moins la première peau, l'âme alvéolaire et la deuxième peau.

16. Procédé selon la revendication 15, **caractérisé en ce que** lors du chauffage du pré-assemblage, on réalise un échauffement plus accentué de la zone localisée dudit pré-assemblage où s'effectuera ultérieurement le compactage localisé par compression.

17. Procédé selon l'une des revendications 1 à 16, **caractérisé en ce qu'**à l'étape c), les première et deuxième peaux présentent une température de formage comprise entre 160 et 200°C environ.

18. Procédé selon l'une des revendications 2 à 17, **caractérisé en ce qu'**on transperce ledit empilement selon une direction perpendiculaire au plan formé par lesdites peaux.

19. Procédé selon l'une des revendications 2 à 17, **caractérisé en ce qu'**on transperce ledit empilement selon une direction oblique par rapport à la normale au plan formé par lesdites peaux.

20. Dispositif pour la mise en oeuvre du procédé selon l'une quelconque des revendications 2 à 19, comprenant un moule de formage **caractérisé en ce qu'**il comporte un pointeau monté sur une paroi interne du moule de sorte qu'il s'étend en direction de l'autre paroi interne en regard dudit moule où il est prévu un logement dans lequel s'engagent ledit pointeau lorsqu'il transperce ledit empilement en cours de formage.

21. Dispositif selon la revendication 20, **caractérisé en ce que** le pointeau est monté mobile sur la paroi supérieure du moule de sorte qu'il descende en direction dudit logement correspondant après que lesdites première et deuxième peaux de l'empilement aient été pincées entre les lesdites parois du moule.

22. Dispositif selon l'une des revendications 20 ou 22, **caractérisé en ce que** le pointeau comprend un fût se terminant par une pointe dont les formes et dimensions sont adaptées à la forme et aux dimensions de l'ouverture traversante et réalisée.

23. Dispositif selon la revendication 22, **caractérisé en ce que** la pointe présente une forme conique.

24. Dispositif selon la revendication 22, **caractérisé en ce que** la pointe présente une forme d'aiguille avec une face plate et une face courbe.

25. Panneau de structure composite du type sandwich, comportant un empilement d'au moins une première peau (101), une âme alvéolaire (102) en matériau thermoplastique et une deuxième peau (103), ledit panneau étant pourvu d'au moins une zone rigidifiée (110) formant insert destinée à accueillir un système de fixation (10), réalisée suivant le procédé selon l'une quelconque des revendications 1 à 19.

## Claims

1. A method of making an insert-forming stiffened zone (110) for receiving a fastening system (10) inside a sandwich-type composite panel (100) comprising a stack of at least a first skin (101), a cellular core (102) of thermoplastic material, and a second skin (103), said first and second skins (101, 103) being constituted by a thermoplastic material and reinforcing fibers, the method being **characterized in that** it comprises the following steps:
a) placing a reinforcing plate (200) at a determined location on the inside face of a portion of a forming mold, said plate (200) being provided with spikes (201) extending towards the other portion of said mold;
b) placing said stack in the forming mold, said first and second skins being previously heated; and
c) pressing said stack by closing the forming mold and applying a forming pressure lying in the range 1 MPa to 3 MPa so as simultaneously to form said panel (100) so that said panel matches the shape of the reinforcing plate (200) which becomes anchored therein by means of its spikes, and to perform local compacting by compressing said stack at the determined location where said reinforcing plate (200) is positioned.

2. A method according to claim 1, **characterized in that** the reinforcing plate (200) is provided with at least one through orifice (202), and in step c), simultaneously with forming said panel, said stack is pierced at the location where the localized compacting is performed via said orifice (202) in said reinforcing plate (200), by moving the fibers of the first skin and then of the second skin away from said location.

3. A method according to claim 1 or claim 2, **characterized in that** a reinforcing plate (200) is used that has spikes (201) extending in a direction perpendicular to the surface of the plate carrying them.

4. A method according to claim 1 or claim 2, **characterized in that** a reinforcing plate (200) is used that has spikes (201) extending in a direction that is inclined relative to the normal to the surface of the plate carrying them.

5. A method according to claim 4, **characterized in that** in step a), the reinforcing plate (200) is positioned on a moving portion (M₃) of a part (M₁) of the forming mold, and in step c), during closure of the forming mold by vertical displacement of said mold part (M₁) towards the other mold part (M₂), the moving portion (M₃) moves over a plane (I) that is inclined relative to the plane of the inside surface of said mold part (M₁) such that the reinforcing plate (200) moves horizontally and the spikes (201) become inserted in said stack along their direction of inclination.

6. A method according to any one of claims 1 to 3, **characterized in that** the spikes (201) of the reinforcing plate (200) used are pointed in shape, having width at the base which is less than or equal to substantially half the width of a yarn of a calendared fiberglass cloth embedded in a thermoplastic material.

7. A method according to any one of claims 1 to 6, **characterized in that** the first and second skins (101, 103) used are made of a woven cloth of reinforcing fibers embedded in a thermoplastic material, in which the warp yarns (103a) are oriented at 90° relative to the weft yarns (103b), and a reinforcing plate (200) is used whose spikes (201) are positioned in such a manner that in step c) they become inserted in the stack, taking up positions bearing against the warp yarns (103a) of the skin (103) against which the reinforcing plate (200) is pressed.

8. A method according to any one of claims 1 to 7, **characterized in that** the first and second skins (101, 103) used are constituted by a reinforcing fiber cloth embedded in a thermoplastic material, in which the warp yarns (103a) are oriented at 90° relative to the weft yams (103b), and a plate is used in which the spikes (201) are positioned in such a manner that in step c) they become inserted in the stack, taking up staggered positions on either side against the warp yarns (103b) of the skin (103) against which the reinforcing plate (200) is pressed.

9. A method according to any one of claims 1 to 8, **characterized in that** in step a) another reinforcing plate (200') is positioned on the inside face of the other part of the forming mold, facing the first reinforcing plate (200) positioned on the inside face of the first part of said mold, the other reinforcing plate (200') being provided both with spikes (201') which extend towards the first reinforcing plate (200) when the plates (200, 200') are in position in the mold to become anchored in the panel during step c), and with housings (201'a) likewise becoming inserted in the panel during step c) and being designed to receive the longer spikes (201a) carried by the first reinforcing plate (200) so that after said panel has been formed, the two plates are bonded together by crimping.

10. A method according to claim 9, **characterized in that** the other reinforcing plate (200') is provided with at least one through orifice which comes into position in register with the through orifice of the first reinforcing plate such that in step c), simultaneously with said panel being formed, said stack is pierced via said orifices in the plates at the location where the localized compacting is performed, by moving the fibers of the first skin and then of the second skin away from said location.

11. A method according to any one of claims 1 to 10, **characterized in that** each reinforcing plate (200) presents thickness lying in the range approximately 0.8 mm to 1.2 mm, and the spikes (201) they comprise are made by stamping the material of said plates.

12. A method according to claim 11, **characterized in that** a reinforcing plate (200) is used which has a first portion (200a) provided with spikes (201) and a through orifice (202a), and a fold-over second portion (200b) pierced by an orifice (202b) that comes into register with the orifice provided in the spike-carrying first portion (200a) when it is folded over onto the first portion.

13. A method according to any one of claims 1 to 12, **characterized in that** step c) of localized compacting of said stack is performed by means of at least one projection provided on at least one wall of the forming mold.

14. A method according to claim 13, **characterized in that** the projection is constituted by the reinforcing plate (200) which is preformed to the shape of said projection.

15. A method according to any one of claims 1 to 14, **characterized in that** prior to forming the panel, a preassembly constituted by the stack of at least the first skin, the cellular core, and the second skin is heated.

16. A method according to claim 15, **characterized in that** while heating the preassembly, the localized zone of said preassembly where the localized compacting by compression is subsequently to be performed is subjected to greater heating.

17. A method according to any one of claims 1 to 16, **characterized in that** in step c), the first and second skins present a forming temperature lying in the range approximately 160°C to 200°C.

18. A method according to any one of claims 2 to 17, **characterized in that** said stack is pierced through in a direction perpendicular to the plane formed by said skins.

19. A method according to any one df claims 2 to 17, **characterized in that** said stack is pierced through in a direction that is oblique relative to the normal to the plane formed by said skins.

20. Apparatus for implementing the method according to any one of claims 2 to 19, the apparatus comprising a forming mold and being **characterized in that** it includes a punch mounted on an inside wall of the mold so as to extend towards the facing other inside wall of said mold where a housing is provided into which said punch engages after piercing through said stack during forming.

21. Apparatus according to claim 20, **characterized in that** the punch is movably mounted on the top wall of the mold so that it moves down towards the corresponding housing after said first and second skins of the stack have been clamped between said walls of the mold.

22. Apparatus according to claim 20 or claim 21, **characterized in that** the punch comprises a shank terminated by a point of shapes and sizes adapted to the shape and the dimensions of the through opening that is made.

23. Apparatus according to claim 22, **characterized in that** the point is conical in shape.

24. Apparatus according to claim 22, **characterized in that** the point is in the form of a needle with a flat face and a curve face.

25. A composite structure panel of the sandwich type comprising a stack of at least a first skin (101), a cellular core (102) of thermoplastic material, and a second skin (103), said panel being provided with at least one insert-forming stiffened zone (110) for receiving a fastener system (10), the zone being made by the method according to any one of claims 1 to 19.

## Patentansprüche

1. Verfahren zum Herstellen einer versteiften Zone (110), die eine Einlage bildet und dazu bestimmt ist, ein Befestigungssystem (10) im Inneren einer Verbundplatte (100) vom Sandwich-Typ aufzunehmen, welche eine Schichtung wenigstens einer ersten Haut (101), eines zellenartigen Kerns (102) aus thermoplastischem Material und einer zweiten Haut (103) umfaßt, wobei die erste und die zweite Haut (101, 103) aus Verstärkungsfasern und einem thermoplastischen Material gebildet sind, **dadurch gekennzeichnet, daß** es die folgenden Schritte umfaßt:
a) man positioniert eine Verstärkungsplatte (200) an einer bestimmten Stelle auf der Innenfläche einer Hälfte einer Form, wobei die Verstärkungsplatte (200) mit Zacken (201) versehen ist, die sich in Richtung der anderen Hälfte der Form erstrecken,
b) man plaziert die Schichtung in der Form, wobei die erste und die zweite Haut zuvor erwärmt sind,
c) man preßt die Schichtung durch Schließen der Form unter einem zwischen 1 und 3 MPa liegenden Formungsdruck, um gleichzeitig die Platte (100) derart zu formen, daß sich die Platte der Form der Verstärkungsplatte (200) anpaßt, die sich mittels ihrer Zacken in dieser letzteren verankert, und um an der bestimmten Stelle, an der die Verstärkungsplatte (200) positioniert ist, eine lokalisierte Kompaktierung durch Kompression der Schichtung zu bewirken.

2. Verfahren nach Anspruch 1, **dadurch gekennzeichnet, daß** die Verstärkungsplatte (200) mit wenigstens einer Durchgangsöffnung (202) versehen ist, und man im Schritt c) gleichzeitig mit der Formung der Platte die Schichtung am Ort der Herstellung der lokalisierten Kompaktierung durch die Öffnung (202) der Verstärkungsplatte (200) durchbohrt, wobei an dieser Stelle die Fasern der ersten und dann der zweiten Haut beseitigt werden.

3. Verfahren nach einem der Ansprüche 1 oder 2, **dadurch gekennzeichnet, daß** man eine Verstärkungsplatte (200) verwendet, deren Zacken (201) sich in einer Richtung senkrecht zur Oberfläche der Verstärkungsplatte, die diese trägt, erstrecken.

4. Verfahren nach einem der Ansprüche 1 bis 2, **dadurch gekennzeichnet, daß** man eine Verstärkungsplatte (200) verwendet, deren Zacken (201) sich in einer Richtung erstrecken, die bezüglich der Normalen auf der Oberfläche der Verstärkungsplatte, welche diese trägt, geneigt sind.

5. Verfahren nach Anspruch 4, **dadurch gekennzeichnet, daß** im Schritt a) die Verstärkungsplatte (200) auf einem beweglichen Teil (M₃) einer Hälfte (M₁) der Form positioniert wird und im Schritt c) beim Schließen der Form durch vertikale Bewegung der Hälfte (M₁) der Form zu deren anderen Hälfte (M₂) sich der bewegliche Teil (M₃) auf einer Ebene (I) bewegt, die gegenüber einer Ebene der Innenfläche der Hälfte (M₁) der Form geneigt ist, derart, daß die Verstärkungsplatte (200) eine horizontale Bewegung zeigt und sich die Zacken (201) entsprechend ihrer Neigungsrichtung in die Schichtung einschieben.

6. Verfahren nach einem der Ansprüche 1 bis 3, **dadurch gekennzeichnet, daß** die Zacken (201) der verwendeten Verstärkungsplatte (200) die Form einer Spitze aufweisen, deren Basis eine Breite hat, die kleiner oder im wesentlichen gleich der Breite eines Fadens eines Gewebe ist, das aus Glasfasern eingebettet in einem thermoplastischen Material kalandriert ist.

7. Verfahren nach einem der Ansprüche 1 bis 6, **dadurch gekennzeichnet, daß** die verwendete erste und zweite Haut (101, 103) durch ein Gewebe von in einem thermoplastischen Material eingebetteten Verstärkungsfasern gebildet werden, in welchem die Kettfäden (103a) in 90° gegenüber den Schußfäden (103b) orientiert sind, und man eine Verstärkungsplatte (200) verwendet, deren Zacken (201) derart positioniert sind, daß sie sich im Schritt c) in die Schichtung einschieben und dabei in Anlage an die Kettfäden (103a) der Haut (103), gegen die die Verstärkungsplatte (200) gedrückt wird, kommen.

8. Verfahren nach einem der Ansprüche 1 bis 7, **dadurch gekennzeichnet, daß** die verwendete erste und zweite Haut (101, 103) durch ein Gewebe von in einem thermoplastischen Material eingebetteten Verstärkungsfasern gebildet werden, in welchem die Kettfäden (103a) in 90° gegenüber den Schußfäden (103b) orientiert sind, und man eine Verstärkungsplatte verwendet, deren Zacken (201) derart positioniert sind, daß sie sich im Schritt c) in die Schichtung einschieben und sich dabei versetzt gegen die Schußfäden (103b) der Haut (103), gegen welche die Verstärkungsplatte (200) gedrückt wird, anordnen.

9. Verfahren nach einem der Ansprüche 1 bis 8, **dadurch gekennzeichnet, daß** man im Schritt a) eine weitere Verstärkungsplatte (200') auf der Innenfläche der anderen Hälfte der Form gegenüber der auf der Innenfläche der ersten Formhälfte positionierten Verstärkungsplatte (200) positioniert, wobei die weitere Verstärkungsplatte (200') zum einen mit Zacken (201') versehen ist, die sich, wenn die Verstärkungsplatten (200, 200') in Position in der Form sind, in Richtung der ersten Verstärkungsplatte (200) erstrecken und die dazu bestimmt sind, sich im Schritt c) in der Platte zu verankern, und zum anderen mit Aufnahmen (201'a), die sich gleichermaßen im Schritt c) in die Platte einschieben und in welche einzugreifen Zacken (201a) größerer Länge bestimmt sind, die von der ersten Verstärkungsplatte (200) derart gehalten sind, daß nach der Formung der Platte die beiden Verstärkungsplatten miteinander quetschverbunden sind.

10. Verfahren nach Anspruch 9, **dadurch gekennzeichnet, daß** die weitere Verstärkungsplatte (200') mit wenigstens einer Durchgangsöffnung versehen ist, die in Position gegenüber der Durchgangsöffnung der ersten Verstärkungsplatte kommt, derart, daß man im Schritt c) gleichzeitig mit der Formung der Platte durch die Öffnungen der Verstärkungsplatten die Platte an der Stelle, an der die lokalisierte Kompaktierung hergestellt wird, durchbohrt, wobei an dieser Stelle die Fasern der ersten und dann der zweiten Haut beseitigt werden.

11. Verfahren nach einem der Ansprüche 1 bis 10, **dadurch gekennzeichnet, daß** jede Verstärkungsplatte (200) eine Dicke ungefähr zwischen 0,8 und 1,2 mm aufweist, und daß die Zacken (201), die diese umfassen, durch Prägung des Materials der Verstärkungsplatte hergestellt sind.

12. Verfahren nach Anspruch 11, **dadurch gekennzeichnet, daß** man eine Verstärkungsplatte (200) verwendet, die folgendes umfaßt: einen ersten Teil (200a), der mit Zapfen (201) und einer Durchgangsöffnung (202a) ausgestattet ist, und einen klappbaren zweiten Teil (200b), der von einer Öffnung (202b) durchbohrt ist, die gegenüber derjenigen zu liegen kommt, die in dem mit Zacken ausgestatteten ersten Teil (200a) vorgesehen ist, wenn jene auf den ersten Teil geklappt wird.

13. Verfahren nach einem der Ansprüche 1 bis 12, **dadurch gekennzeichnet, daß** man im Schritt c) die lokalisierte Kompaktierung der Schichtung mit Hilfe wenigstens einer Erhöhung durchführt, die auf mindestens einer Wand der Form vorgesehen ist.

14. Verfahren nach Anspruch 13, **dadurch gekennzeichnet, daß** die Erhöhung durch die an der Form dieser Erhöhung vorgeformte Verstärkungsplatte (200) gebildet wird.

15. Verfahren nach einem der Ansprüche 1 bis 14, **dadurch gekennzeichnet, daß** man vor dem Formen der Platte einen Vorverband erwärmt, der durch die Schichtung wenigstens der ersten Haut, des zellenartigen Kerns und der zweiten Haut gebildet ist.

16. Verfahren nach Anspruch 15, **dadurch gekennzeichnet, daß** man bei der Erwärmung des Vorverbands eine verstärkte Erwärmung der lokalisierten Zone des Vorverbands vornimmt, wo letztlich die lokalisierte Druckkompaktierung durchgeführt wird.

17. Verfahren nach einem der Ansprüche 1 bis 16, **dadurch gekennzeichnet, daß** im Schritt c) die erste und zweite Haut eine Formungstemperatur zwischen ungefähr 160 und 200°C aufweisen.

18. Verfahren nach einem der Ansprüche 2 bis 17, **dadurch gekennzeichnet, daß** man die Schichtung in einer Richtung senkrecht zur durch die Häute gebildeten Ebene durchbohrt.

19. Verfahren nach einem der Ansprüche 2 bis 17, **dadurch gekennzeichnet, daß** man die Schichtung in einer Richtung durchbohrt, die gegenüber der Normalen zur von den Häuten gebildeten Ebene geneigt ist.

20. Vorrichtung zur Durchführung des Verfahrens nach irgendeinem der Ansprüche 2 bis 19, umfassend eine Form, **dadurch gekennzeichnet, daß** sie einen Stift umfaßt, die auf einer Innenwand der Form derart angebracht ist, daß sie sich in Richtung der anderen Innenwand der Form gegenüber erstreckt, wo eine Aufnahme vorgesehen ist, in welche der Stift eingreift, wenn er die Schichtung im Verlauf der Formung durchbohrt.

21. Vorrichtung nach Anspruch 20, **dadurch gekennzeichnet, daß** der Stift beweglich auf der oberen Wand der Form angebracht ist, derart, daß er abwärts in Richtung der entsprechenden Aufnahme weist, nachdem die erste und die zweite Haut der Schichtung zwischen den beiden Wänden der Form gefaßt worden sind.

22. Vorrichtung nach einem der Ansprüche 20 oder 21, **dadurch gekennzeichnet, daß** der Stift einen in einer Spitze endenden Schaft umfaßt, dessen Form und Abmessungen der Form und den Abmessungen der durchquerten Öffnung angepaßt und ausgeführt sind.

23. Vorrichtung nach Anspruch 22, **dadurch gekennzeichnet, daß** die Spitze eine konische Form aufweist.

24. Vorrichtung nach Anspruch 22, **dadurch gekennzeichnet, daß** die Spitze die Form einer Nadel mit einer ebenen Stirnfläche und einer gekrümmten Stirnfläche aufweist.

25. Verbundstrukturplatte vom Sandwich-Typ, aufweisend eine Schichtung von wenigstens einer ersten Haut (101), einem zellenartigen Kern (102) aus thermoplastischem Material und einer zweiten Haut (103), wobei die Platte mit wenigstens einer eine Einlage bildenden versteiften Zone (110) versehen ist, die dazu bestimmt ist, ein Befestigungssystem (10) aufzunehmen, hergestellt gemäß dem Verfahren nach irgendeinem der Ansprüche 1 bis 19.
